# EUROPÄISCHE PATENTSCHRIFT

(11) **EP 2 527 883 B1**
(45) Veröffentlichungstag und Bekanntmachung des Hinweises auf die Patenterteilung: **21.08.2013**
(21) Anmeldenummer: 12165229.1
(22) Anmeldetag: 23.04.2012
(51) Int. Cl.: G02B 5/122, G02B 5/124, G02B 27/28

(54) **Retroreflektor für eine Reflexionslichtschranke**
Retro-reflector for a reflection light barrier
Rétroréflecteur pour une barrière lumineuse à réflexion

(30) Priorität: 26.05.2011 DE 102011050634
(43) Veröffentlichungstag der Anmeldung: 28.11.2012
(73) Patentinhaber: SICK AG, 79183 Waldkirch (DE)
(72) Erfinder: Paul, Simon, 88400 Bieberach (DE); Wiethege, Friedhelm, 79350 Sexau (DE)
(74) Vertreter: Hehl, Ulrich

(56) Entgegenhaltungen:
- EP-A2- 0 285 397
- DE-A1- 10 228 013
- DE-A1- 10 312 708
- DE-A1-102004 042 812
- JP-A- 2004 045 487
- US-A- 3 563 633
- US-A1- 2003 223 080

## Beschreibung

Die Erfindung betrifft einen Retroreflektor für eine Reflexionslichtschranke sowie ein Verfahren zur polarisationsdrehenden Reflexion nach dem Oberbegriff von Anspruch 1 beziehungsweise 8.

Reflektoren werden als kooperative Ziele für optoelektronische Sensoren eingesetzt, um zuverlässig einen Anteil des Sendelichts wieder zu empfangen. Ein wichtiges Beispiel eines Sensors mit einem Reflektor ist eine Reflexionslichtschranke. Es können auch mehrere solcher Reflexionslichtschranken parallel zueinander angeordnet werden, um ein Lichtgitter zu bilden. Reflektoren werden auch als Ziele für entfemungsmessende Lichttaster oder Scanner eingesetzt.

Eine Reflexionslichtschranke sendet aus einer Lichtquelle einen Sendelichtstrahl auf einen am gegenüberliegenden Ende eines Überwachungsbereichs angebrachten Reflektor, von dem der Sendelichtstrahl zurückgeworfen wird. Der derart entstehende reflektierte Empfangsstrahl wird dann von einem in der Nähe des Lichtsenders angeordneten Lichtempfänger erkannt. Ist der Lichtstrahl unterbrochen, so empfängt der Lichtempfänger nichts und löst eine Objekterkennungsfunktion aus.

Bei Verwendung eines einfachen Reflektors, wie einer Spiegelfläche, muss die Reflektorfläche sehr genau ausgerichtet werden, damit der reflektierte Empfangsstrahl den Lichtempfänger trifft. Deshalb werden Retroreflektoren eingesetzt, die das Licht unabhängig vom Einfallswinkel in sich reflektieren, also den Empfangslichtstrahl wieder in die Richtung reflektieren, aus welcher der Sendestrahl kommt.

Ein Retroreflektor basiert in einer häufig eingesetzten Ausprägung auf drei rechtwinklig zueinander ausgerichteten reflektierenden Flächen, die auch als Tripel bezeichnet werden. Die geometrische Anordnung entspricht einem hohlen Würfeleck mit innen verspiegelten Wänden. Alternativ werden die Reflexionsflächen von einem optisch transparenten Material gebildet, an dem wegen der relativ flachen Einfallswinkel Totalreflexion stattfindet. Ein solches Tripelprisma ist an der Vorderseite plan, und auf der Rückseite stehen die drei unverspiegelten Tripelflächen zueinander senkrecht. In der Praxis eingesetzte Retroreflektoren weisen oft anstelle eines einzelnen Tripels eine Vielzahl von derartigen Tripeln auf, beispielsweise als Tripelarray oder als Reflexionsfolie mit mikroprismatischen Strukturen.

Ein zu verhindernder Schaltfehler bei einer Reflexionslichtschranke, der unter dem Begriff Spiegel- oder Weißsicherheit bekannt ist, kann nun entstehen, wenn ein spiegelndes oder sehr helles Objekt in den Strahlengang eintritt. Dieses Objekt remittiert möglicherweise so viel Licht, dass die Lichtschranke fälschlich keine Strahlunterbrechung erkennt.

Eine herkömmliche Lösung zur Erhöhung der Detektionssicherheit gegenüber derartigen Fehlern besteht in der Verwendung von polarisiertem Licht. Dazu wird der Sendelichtstrahl mit Hilfe eines Polarisators linear polarisiert. Dieses linear polarisierte Sendelicht trifft, sofern sich kein Objekt im Strahlengang befindet, auf einen Retroreflektor, der auf dem tripelprismatischen Prinzip beruht. An den Reflexionsflächen eines Tripelprismas tritt aufgrund der Totalreflexion eine relative Phasenverschiebung zwischen den s- und p-polarisierten Anteilen der einfallenden Lichtwelle auf. Somit verändert sich der Polarisationszustand der reflektierten Lichtwelle gegenüber der einfallenden Lichtwelle. Nach den drei Reflexionen an den drei Reflexionsflächen eines Tripels, die jede retroreflektierte Lichtwelle erfährt, entsteht somit eine Polarisationsänderung, bei welcher die Polarisation an sich erhalten bleibt, aber ihre Orientierung wechselt. Der retroreflektierte Empfangsstrahl mit seiner geänderten Polarisation fällt auf einen Polfilter vor dem Empfänger, der zu dem Polarisator gekreuzt beziehungsweise orthogonal angeordnet ist, und lässt den Empfangsstrahl wegen der Polarisationsdrehung in dem Retroreflektor ungehindert passieren.

Wird der Sendestrahl dagegen von einem Spiegel oder einem hellen Objekt remittiert, so ist er in der falschen Richtung polarisiert oder verliert seine Polarisationseigenschaften. Da der Polarisationsfilter nur Lichtanteile passieren lässt, die gegenüber dem Sendelicht eine um 90° gedrehte Polarisation aufweisen, wird der an einem Objekt statt an dem Retroreflektor entstehende Empfangsstrahl von dem Polarisationsfilter nahezu komplett ausgeblendet. Auch Spiegel und helle Objekte werden so als Strahlunterbrechung erkannt.

Eine solche Reflexionslichtschranke, die mit polarisiertem Licht arbeitet und einen Retroreflektor mit einer Vielzahl von als Tripelspiegeln ausgebildeten Elementarreflektoren aufweist, ist beispielsweise aus DE 199 24 470 A1 bekannt.

Ein Retroreflektor in der Form einer Würfelecke wird in der EP 0 285 397 A2 eingesetzt, um einen Laserstrahl mit einer bevorzugten Polarisationsrichtung zu erzeugen.

Die DE 10 2004 042 812 A1 offenbart eine phasenkompensierte Würfelecke bei der Laserinterferometrie. Der eingesetzte Retroreflektor umfasst drei Rückreflexionsoberflächen, von denen die erste und die dritte mit einem phasenkompensierenden Filmstapel beschichtet sein können. Derart beschichtet bewahrt die phasenkompensierte Würfelecke die Polarisationsausrichtung und Elliptizität des einfallenden Lichts.

In der JP 2004 045487 A wird eine Retroreflektorplatte für ein LCD-Display vorgestellt. Eine Vielzahl von kubischen Tripeln bildet eine Wabenstruktur. Alternierend werden in jeder Zeile in benachbarten Tripeln eine Fläche oder zwei Flächen des Tripels mit einer metallischen Beschichtung versehen. Dadurch wird erreicht, dass die Beschichtung für alle Tripel aus einer Blickrichtung sichtbar ist.

Aus der DE 102 28 013 A1 ist ein Teiltransmissionsreflektor und optisches Sicherheitssensorsystem bekannt. Der Werkstoff des Reflektors hat die Eigenschaft, dass er sichtbares Licht nahezu nicht reflektiert, dagegen in einem anderen Spektralbereich Licht reflektiert. In einer Ausführungsform werden Tripel des Reflektors vollkommen oder teilweise mit einer Beschichtung versehen, ohne dass erläutert wird, welche Teile des Tripels von einer teilweisen Beschichtung umfasst sein sollen.

Ein dreiflächiger Reflektor gemäß US 3 563 633 weist eine phasenkompensierende Beschichtung auf, damit der Polarisationszustand reflektierten Lichts demjenigen des einfallenden Lichts entspricht.

Die US 2003/0223080 A1 sieht eine oder mehrere Beschichtungen auf jeder Oberfläche einer Würfelecke vor.

Die DE 103 12 708 A1 zeigt einen als Retroreflektor ausgebildeten Schichtverbund aus Kunststoff, in dessen Reflexionsschicht eine von im Wesentlichen identisch geformten dreidimensionalen Strukturelementen gebildete Reliefstruktur eingeformt ist. Die Reliefstruktur ist in wenigstens einem Flächenelement mit einer Mikrostruktur additiv überlagert.

Tatsächlich ist aber die Vorstellung idealisiert, dass linear polarisiertes Licht von einem Retroreflektor als um 90° gedrehtes linear polarisiertes Licht in sich zurückgeworfen wird. Es entsteht vielmehr elliptisch polarisiertes Licht mit lediglich einem gewissen Anteil von beispielsweise nur 16 % in der gewünschten Richtung linear polarisiertem Licht. Der übrige Anteil des Empfangslichts geht deshalb an dem Polfilter des Lichtempfängers verloren und führt zu Verlusten an Reichweite und Funktionsreserve der Reflexionslichtschranke.

Es ist daher Aufgabe der Erfindung, die Reflexionseigenschaften eines nach dem Tripelprinzip aufgebauten Retroreflektors für einfallendes polarisiertes Licht zu verbessern.

Diese Aufgabe wird durch einen Retroreflektor für eine Reflexionslichtschranke sowie ein Verfahren zur polarisationsdrehenden Reflexion nach Anspruch 1 beziehungsweise 8 gelöst. Dabei geht die Erfindung von dem Grundgedanken aus, als Reflektor Tripel mit drei zueinander rechtwinklig angeordneten Reflexionsflächen zu verwenden. Die drei Reflexionsflächen der Tripel werden aber nicht gleichartig ausgebildet, sondern gezielt mit unterschiedlichen Eigenschaften ausgestattet. Dies wird durch Beschichtungen oder Oberflächenstrukturierungen erreicht, die zu einem geänderten Reflexionsverhalten führen. Selbstverständlich sind von der Erfindung auch solche Reflektoren umfasst, bei denen die Reflexionsflächen nicht exakt, sondern nur innerhalb von Toleranzen rechtwinklig zueinander angeordnet sind.

Die Erfindung hat den Vorteil, dass die Polarisationsänderung verbessert wird, die einfallendes Licht an dem Retroreflektor erfährt. Es wird bei einfallendem, linear polarisiertem Licht ein größerer Anteil als um 90° gedreht linear polarisiertes Licht reflektiert. Bei Einsatz des Retroreflektors in einem Sensor mit Polfilter vor dem Lichtempfänger passiert daher ein höherer Anteil den Polfilter, es entsteht ein höherer Lichtstrom auf dem Detektor. Dadurch wird im Vergleich mit der Verwendung eines herkömmlichen Retroreflektors die Reichweite und die Funktionsreserve des Sensors erhöht.

Eine Reflexionsfläche des Tripels weist eine Beschichtung oder eine Oberflächenstrukturierung auf, während die anderen beiden Reflexionsflächen des Tripels glatt und unbeschichtet sind. Dies zeigt besonders günstige Polarisationseigenschaften. Zudem muss gegenüber einem herkömmlichen, unbeschichteten Retroreflektor nur eine Reflexionsfläche verändert werden.

In einer alternativen Ausgestaltung, die nicht unter den Schutzumfang der Patentansprüche fällt, weisen zwei Reflexionsflächen des Tripels eine Beschichtung oder eine Oberflächenstrukturierung auf, während die andere Reflexionsfläche des Tripels glatt und unbeschichtet ist. Hier werden also zwei Reflexionsflächen anstelle von einer Reflexionsfläche beschichtet oder strukturiert. Auch damit lassen sich die Polarisationselgenschaften gegenüber einem herkömmlichen Retroreflektor mit drei gleichen, insbesondere unbeschichteten Reflexionsflächen verbessern.

Die Beschichtung ist vorzugsweise metallisch und weist insbesondere Gold, Silber oder Aluminium auf. Durch eine derartige metallische Beschichtung lassen sich die Reflexionseigenschaften je nach Intensität der Beschichtung gezielt manipulieren, um insgesamt möglichst gute Polarisationseigenschaften des Retroreflektors zu erhalten.

Vorteilhafterweise ist eine dichroitische Metalloxidbeschichtung vorgesehen. Auch damit können die Reflexionseigenschaften in gewünschter Weise verändert werden.

Die Beschichtung ist bevorzugt durch Sputtern oder Bedampfen aufgebracht. Das sind bewährte Verfahren, mit denen ausgewählte Reflexionsflächen gezielt und in einem vorgegebenen Maß mit einer Beschichtung versehen werden können.

Die Oberflächenstrukturierung weist vorteilhafterweise Strukturen in der Größenordnung der Wellenlänge von sichtbarem, infrarotem oder ultraviolettem Licht auf, insbesondere des von der Reflexionslichtschranke ausgesandten Lichts. Mit solchen Strukturelementen kann die polarisationsbeeinflussende Reflexion alternativ oder zusätzlich zu einer Beschichtung verändert werden.

Das jeweilige Tripel ist bevorzugt ein Tripelprisma aus einem optisch transparentem Material, insbesondere Glas, wobei an den Reflexionsflächen Totalreflexion stattfindet. Derartige tripelprismatische Retroreflektoren können schon ohne die erfindungsgemäße Beschichtung oder Strukturierung für eine Polarisationsdrehung eingesetzt werden. Der Anteil von Licht mit der gewünschten Polarisationsdrehung wird dann durch die unterschiedlichen Reflexionseigenschaften an den drei Reflexionsflächen des Tripels weiter verbessert. Eine Alternative zu einem Tripelprisma bildet ein Tripel aus drei rechtwinklig zueinander angeordneten Vorderflächenspiegeln.

Der Retroreflektor weist eine Vielzahl in gleicher Orientierung nebeneinander angeordneter Tripel auf. Anstelle eines Einzeltripels, das bei einer gewünschten Fangfläche eine recht große Tiefe aufweisen muss, werden viele kleinere Tripel verwendet. Die Tripel werden vorzugsweise in einer Wabenstruktur nebeneinander angeordnet, mit der sich ein Füllfaktor von Eins erreichen lässt. Die Tripel sind untereinander gleichartig orientiert, und auch die Reflexionseigenschaften der jeweiligen drei Reflexionsflächen einschließlich der Beschichtung oder Strukturierung wird vorzugsweise von Tripel zu Tripel gleich gewählt. Es ist also beispielsweise in allen Tripeln die erste Reflexionsfläche beschichtet, während die beiden anderen Reflexionsflächen unbeschichtet sind. Damit wird erreicht, dass die Eigenschaften des reflektierten Lichtstrahls unabhängig von dem konkreten Tripel sind, von dem der Lichtstrahl reflektiert wird. Vorteilhafterweise wird die Vielzahl von Tripeln dadurch realisiert, dass der Retroreflektor eine Folie mit einer Strukturierung in Form einer Vielzahl von Mikroprismen aufweist.

In vorteilhafter Weiterbildung wird der erfindungsgemäße Retroreflektor in einem optoelektronischen Sensor eingesetzt, der mindestens einen Lichtsender und mindestens einen Lichtempfänger aufweist, die derart zueinander angeordnet sind, dass ein von dem Lichtsender ausgesandter Lichtstrahl auf einem Sendepfad zu dem Retroreflektor und auf einem im Wesentlichen mit dem Sendepfad übereinstimmenden Empfangspfad zu dem Lichtempfänger zurück geführt wird. Ein Beispiel für einen solchen Sensor ist eine Reflexionslichtschranke. Dabei ist bevorzugt dem Lichtsender ein Polarisator und/oder dem Lichtempfänger ein Polfilter zugeordnet. Der Sensor arbeitet also mit polarisiertem Licht und profitiert daher besonders von den verbesserten Eigenschaften des Retroreflektors. Vorzugsweise ist eine Auswertungseinheit des Sensors dafür ausgebildet, eine Unterbrechung des Lichtstrahls als Erfassung eines Objekts zu erkennen. Diese Auswertung erfolgt aufgrund des höheren Anteils von in der gewünschten Weise polarisiertem Empfangslicht mit höherer Funktionsreserve und Reichweite.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Ansicht eines Tripels eines Retroreflektors;
- Fig. 2a: eine Anordnung mehrerer Tripel gemäß Figur 1 zu einer Reihe;
- Fig. 2b: eine Wabenanordnung einer Vielzahl von Tripeln gemäß Figur 1 zu einem Tripelarray;
- Fig. 3a: eine zu Figur 1 alternative Ansicht eines Tripels eines Retroreflektors aus anderer Perspektive;
- Fig. 3b: eine Einteilung des Tripels gemäß Figur 3b in sechs Sektoren abhängig von der Reihenfolge der Reflexionen eines einfallenden Lichtstrahls;
- Fig. 3c: eine Darstellung des Polarisationszustands des reflektierten Lichtstrahls in den Sektoren gemäß Figur 3b, wenn linear polarisiertes Licht mit vertikaler Orientierung in ein unbeschichtetes Tripel einfällt;
- Fig. 3d: eine alternative tabellarische Darstellung der Polarisationszustände gemäß Figur 3c;
- Fig. 4: eine tabellarische Darstellung ähnlich Figur 3, bei welcher die Polarisationszustände in den Sektoren für ein unbeschichtetes und für ein jeweils an genau einer Fläche beschichtetes Tripel gegenübergestellt werden;
- Fig. 5: ein Diagramm der aus den Polarisationszuständen gemäß Figur 4 resultierenden relativen Beleuchtungsstärke in den einzelnen Sektoren für jeweils ein unbeschichtetes und ein an genau einer Fläche beschichtetes Tripel;
- Fig. 6: eine tabellarische Darstellung analog Figur 4, bei welcher die Polarisationszustände in den Sektoren für ein unbeschichtetes und für ein jeweils an zwei Flächen beschichtetes Tripel gegenübergestellt werden;
- Fig. 7: ein Diagramm der aus den Polarisationszuständen gemäß Figur 6 resultierenden relativen Beleuchtungsstärke in den einzelnen Sektoren für jeweils ein unbeschichtetes und ein an zwei Flächen beschichtetes Tripel;
- Fig. 8a: eine vergleichende Darstellung der Funktionsreserve gegenüber der Position für ein unbeschichtetes Tripel, ein Tripel mit genau einer beschichteten Fläche und ein Tripel mit zwei beschichteten Flächen bei einem Rotationswinkel des Tripels gegenüber dem einfallenden Lichtstrahl von 0°;
- Fig. 8b: eine vergleichende Darstellung analog Figur 8a bei einem Rotationswinkel des Tripels gegenüber dem einfallenden Lichtstrahl von 30°;
- Fig. 9: eine vergleichende Darstellung der auf den Fall eines unbeschichteten Retroreflektors normierten relativen Reichweite in Abhängigkeit von der Winkelstellung des Tripels zu dem einfallenden Lichtstrahl für ein Tripel mit genau einer beschichteten Fläche, mit zwei beschichteten Flächen und zum Vergleich mit unbeschichtetem Flächen; und
- Fig. 10: eine schematische Darstellung einer Reflexionslichtschranke mit einem erfindungsgemäßen Retroreflektor.

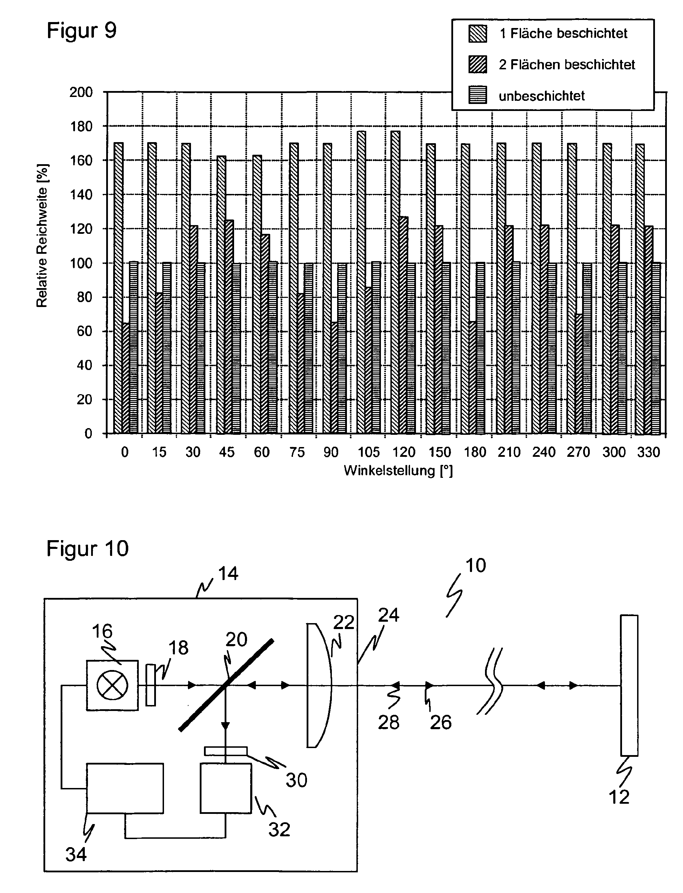

Figur 10 zeigt den allgemeinen Aufbau einer Reflexionslichtschranke 10 mit einem erfindungsgemäßen Retroreflektor 12, dessen Aufbau weiter unten im Detail diskutiert wird. In einem Gehäuse 14 ist ein Lichtsender 16 vorgesehen, beispielsweise mit einer LED oder einem Laser beliebiger Wellenlänge unter anderem im infraroten, sichtbaren oder ultravioletten Bereich. Der Lichtsender 16 sendet Licht durch einen Polarisator 18 zu einem Strahlteiler 20.

An dem Strahlteiler 20 wird ein Teil des Lichtes reflektiert und muss dann zur Vermeidung von optischem Übersprechen im Gehäuse 14 oder auf eine andere nicht dargestellte Weise absorbiert werden. Der übrige Teil des Lichtes wird transmittiert und gelangt über eine strahlformende Optik 22 und ein Sichtfenster 24 des Gehäuses 14 als Sendelichtstrahl 26 in den eigentlichen Sendepfad.

Der Sendelichtstrahl 26 trifft auf den Retroreflektor 12 und wird dort nach dreimaliger Reflexion in sich zurückgeworfen. Er kehrt also als Empfangslichtstrahl 28 in dieselbe Richtung zurück, aus welcher der Sendelichtstrahl 26 kommt. Dabei entsteht lediglich eine gewisse Abweichung durch Toleranzen, Abbildungsfehler und die Struktur des Retroreflektors 12. Der Empfangslichtstrahl 28 tritt durch das Sichtfenster 24 in das Gehäuse 14 ein und trifft nach Strahlformung in der strahlformenden Optik 22 auf den Strahlteiler 20.

Am Strahlteiler 20 wird ein Teil des Empfangslichtstrahls 28 transmittiert und geht so für eine Auswertung verloren. Der übrige Teil des Empfangslichtstrahls 28 wird durch einen Polfilter 30 mit einer zu dem Polarisator 18 senkrechten Polarisationsrichtung auf einen Lichtempfänger 32 reflektiert und dort beispielsweise mittels einer Photodiode oder eines CCD- bzw. CMOS-Chips in ein elektrisches Signal umgesetzt.

Eine Auswertungseinheit beziehungsweise Steuerung 34 empfängt dieses elektrische Signal. Die Steuerung 34 erkennt somit, ob das Licht des Lichtsenders 16 ungehindert empfangen wird. Wird kein elektrisches Signal entsprechend einem empfangenen Empfangslichtstrahl 28 ausgegeben, so erkennt die Steuerung 34 eine Unterbrechung und damit ein Objekt im Strahlengang. Darauf reagiert die Steuerung 34, indem sie ein Signal für die Anwesenheit eines Objekts ausgibt.

Abweichungen von dem allgemeinen Aufbau der Reflexionslichtschranke 10 sind möglich. Beispielsweise kann die strahlformende Optik 22 eine einfache Sammellinse oder ein Objektiv aus mehreren optischen Elementen sein, oder sie kann in das Sichtfenster 24 integriert werden. Anstelle des dargestellten Autokollimationsprinzips mit Strahlteiler 20 kann die Reflexionslichtschranke 10 auch anders aufgebaut sein, etwa nach dem Doppelaugenprinzip mit getrenntem Sende- und Empfangspfad. Die Erfindung wird anhand der Reflexionslichtschranke 10 beschrieben, bezieht sich aber ebenso auf andere optoelektronische Sensoren, von denen einleitend einige genannt sind. Auch ist ein Einsatz des Retroreflektors 12 unabhängig von Sensoren zumindest prinzipiell denkbar.

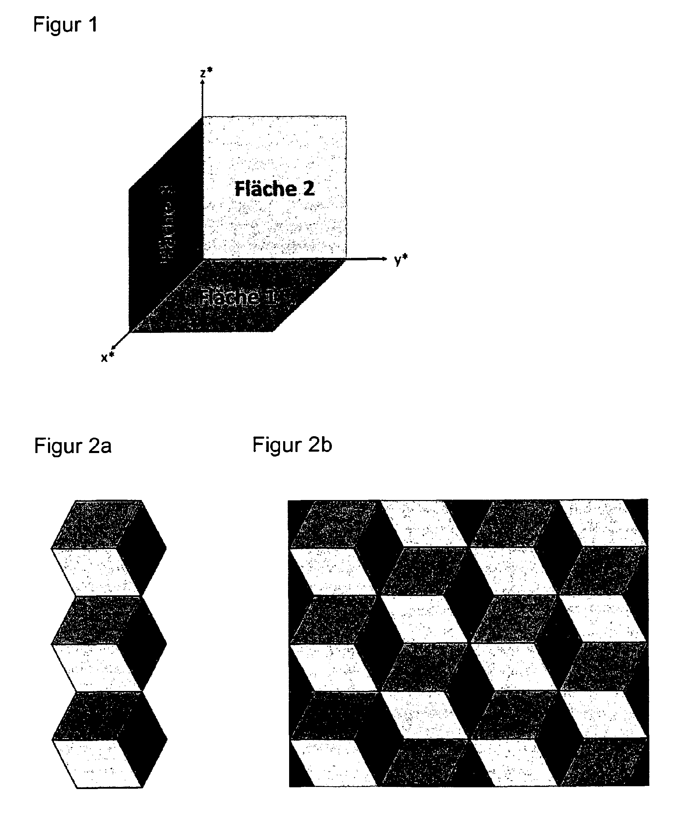

Figur 1 zeigt eine schematische Ansicht eines Tripels des Retroreflektors 12. Das Trlpel weist drei zueinander rechtwinklig angeordnete Reflexionsflächen auf, deren Geometrie einer innen verspiegelten Würfelecke entspricht. Das Tripel selbst wird bevorzugt von einem optisch transparenten Material gebildet und dann als Tripelprisma bezeichnet. Dabei trifft ein einfallender Lichtstrahl relativ flach auf die Reflexionsflächen auf und wird deshalb totalreflektiert. So entsteht eine relative Phasenverschiebung der s-polarisierten und der p-polarisierten Anteile und dadurch eine Veränderung des Polarisationszustandes.

Aus dem Einzeltripel werden auch Anordnungen aus einer Vielzahl von Tripeln gebildet. Figur 2a zeigt mehrere zu einer Reihe angeordnete Tripel. In Figur 2b wird durch eine versetzte Nebeneinanderanordnung solcher Reihen eine Wabenstruktur gebildet, die einen Füllfaktor von Eins erreicht, also eine effektiv lückenlose retroreflektierende Fläche. Derartige Tripelanordnungen oder Tripelarrays können auch als Folien mit Mikroprismastrukturen hergestellt werden.

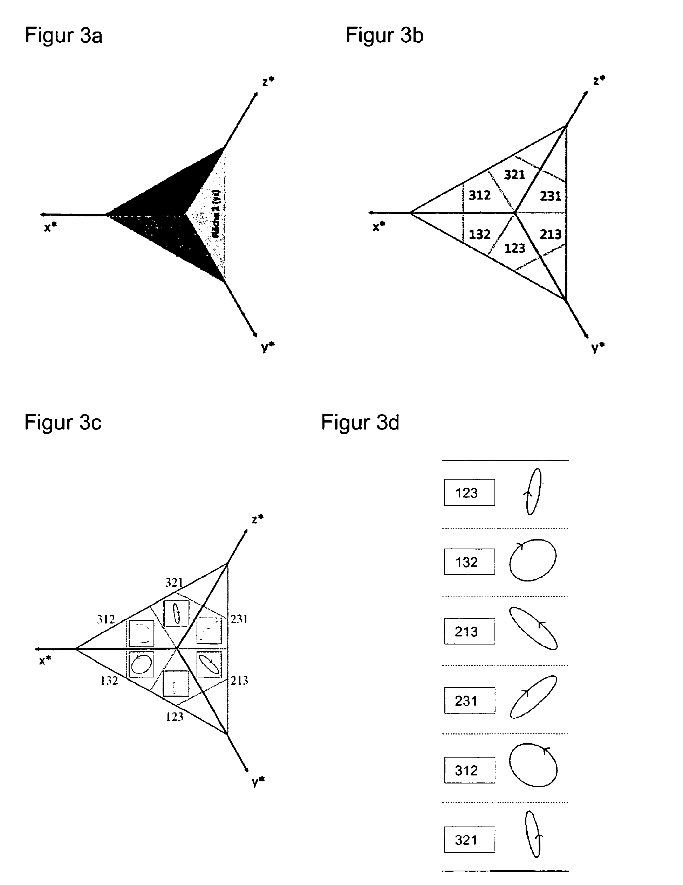

Die Darstellung gemäß Figur 1 lässt die Geometrie eines Tripels besonders gut erkennen. Figur 3 zeigt eine alternative Ansicht eines Tripels aus einer Perspektive, bei der die drei Reflexionsflächen symmetrisch und gleichartig dargestellt werden. Figur 3b verwendet diese Darstellung, um unterschiedliche Sektoren des Tripels einzuführen. Bei der Retroreflexion an einem tripelprismatischen Retroreflektor werden die einfallenden Lichtstrahlen an jeder der drei Reflexionsflächen genau einmal reflektiert. Abhängig von dem Auftreffpunkt der Strahlen auf die Frontfläche des Retroreflektors sind somit sechs unterschiedliche Reflexionsreihenfolgen und damit Strahlverläufe in dem Tripel möglich. Diese Reihenfolgen werden durch Ziffernfolgen codiert, beispielsweise 123 für einen Strahl, der zuerst an Fläche 1, dann an Fläche 2 und zuletzt an Fläche 3 reflektiert wird. Figur 3b zeigt, dass das Tripel sich in sechs Sektoren unterteilen lässt, wobei ein Auftreffen innerhalb eines Sektors zu der jeweils angegebenen Reflexionsreihenfolge führt.

Die Polarisationsänderung, die der Retroreflektor bei einem einfallenden Lichtstrahl bewirkt, hängt von den Einfallswinkeln auf die Reflexionsflächen und damit auch von der Reflexionsreihenfolge ab. Deshalb ergeben sich für die sechs Sektoren sechs unterschiedliche Polarisationsrichtungen, die in Figur 3c in den jeweiligen Sektoren für einen unbeschichteten Retroreflektor eingezeichnet sind. Dabei wird, wie in allen folgenden Darstellungen, beispielhaft von einem in vertikaler Richtung linear polarisierten Einfallslichtstrahl ausgegangen. Ideal für die Erkennung in der Reflexionslichtschranke 10 wäre eine Polarisationsänderung auf horizontal orientiertes linear polarisiertes Licht.

Wie aus Figur 3c ersichtlich, entsteht stattdessen jeweils elliptisch polarisiertes Licht, dessen Anteil an Licht mit der gewünschten Polarisierung abhängig vom Sektor größer oder kleiner ist. Figur 3d zeigt dieselben Polarisationszustände in Abhängigkeit des Sektors noch einmal in einer tabellarischen Ansicht. Um die Lichtausbeute als Ganzes zu beurteilen, müsste über die rechte Spalte integriert werden, beziehungsweise eine Art mittlerer Polarisationszustand bestimmt werden. Das Ergebnis ist weit von dem gewünschten, in horizontaler Richtung linear polarisierten Empfangslicht entfernt.

Erfindungsgemäß ist nun vorgesehen, durch eine Beschichtung von Reflexionsflächen des Tripels die relative Phasenänderung, die bei einer Reflexion auftritt, zu verändern. Nach den drei Reflexionen an den drei Reflexionsflächen ergibt sich somit eine modifizierte Polarisationsdrehung durch den Retroreflektor 12. Mit der Beschichtung wird die Polarisationsdrehung dahingehend beeinflusst, dass mehr Licht den Polarisator 30 passieren kann und somit zusätzliches Empfangslicht den Lichtempfänger 32 erreicht. Damit wird ein größeres Empfangssignal erzielt und so die Reichweite beziehungsweise Funktionsreserve der Reflexionslichtschranke 10 erhöht.

Dabei werden die drei Reflexionsflächen eines Tripels mit unterschiedlichen Reflexionseigenschaften versehen. Dies kann durch unterschiedliche Materialien, Intensitäten oder Verfahren der Beschichtung geschehen. Genauer erläutert werden zwei beispielhafte Ausführungsformen, nämlich dass genau eine Fläche beschichtet ist und die beiden übrigen Flächen unbeschichtet sind, beziehungsweise eine nicht vom Schutzumfang der Patentansprüche umfasste Ausführungsform, in der zwei Flächen beschichtet sind und die übrige Fläche unbeschichtet ist.

Das Material der Beschichtung kann unterschiedlicher Natur sein. Voraussetzung ist, dass die Beschichtung die Phasenverschiebung des polarisierten einfallenden Lichtstrahls in der Art beeinflusst, dass die Polarisationsellipse eine Vorzugsrichtung in Orthogonalstellung zur Polarisationsrichtung der einfallenden Strahlen aufweist. Diese Eigenschaft erfüllen metallische Beschichtungen, beispielsweise mit Gold, Silber oder Aluminium. Auch das Bedampfen oder Sputtern mit dichroitischen Metalloxid-Beschichtungen ist möglich.

Alternativ oder zusätzlich zu einer Beschichtung kann die Phasenverschiebung bei der Totalreflexion auch durch eine Strukturierung der Reflexionsflächen erreicht werden. Dazu werden vorzugsweise Oberflächenstrukturen ausgebildet, deren Größe in etwa der Wellenlänge der einfallenden Strahlung entspricht.

In den im Folgenden erläuterten Figuren wird als rein beispielhaft aufzufassende Veränderung einer oder mehrerer Reflexionsflächen eine Goldbeschichtung verwendet, die zu einer Reflektivität von 92 % führt. Dabei sollte die Reflektivität auf die Wellenlänge des Lichtsenders 16 abgestimmt werden, beispielsweise auf 648 nm einer LED-Lichtquelle.

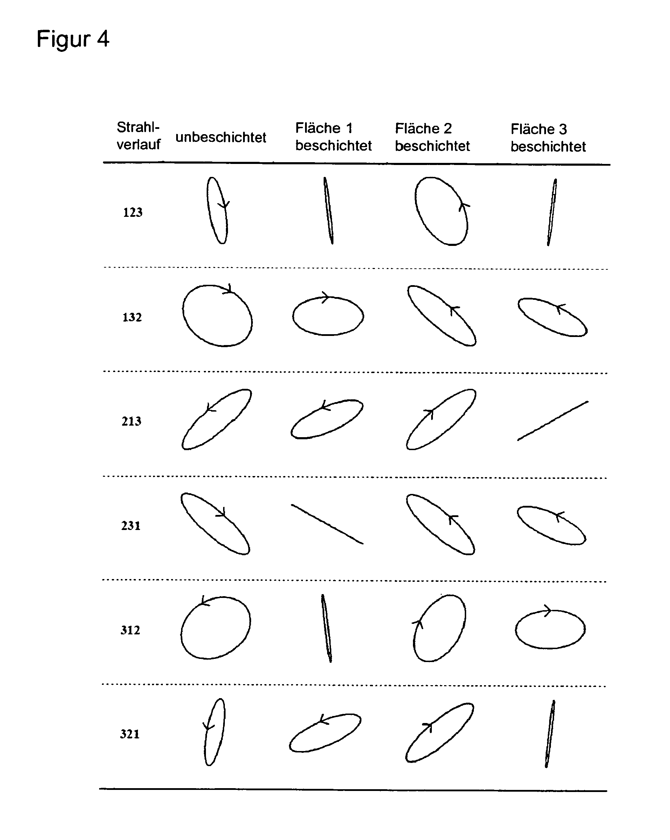

Figur 4 zeigt tabellarisch den Polarisationszustand des Empfangslichtstrahls 28 bei unbeschichtetem Retroreflektor beziehungsweise bei einem Retroreflektor 12 mit genau einer beschichteten Reflexionsfläche. Die erste Spalte entspricht somit Figur 3d. Die weiteren drei Spalten zeigen die möglichen Fälle einer Beschichtung von Fläche 1, Fläche 2 oder Fläche 3.

In einigen Sektoren, etwa dem Sektor 213 bei beschichteter Fläche 1, zeigt sich ein deutlich verbessertes Ergebnis, welches einem in horizontaler Richtung linear polarisierten Empfangslichtstrahl 28 bereits sehr nahe kommt. In anderen Sektoren, etwa dem Sektor 123 bei beschichteter Fläche 1 oder Fläche 3, wird das Ergebnis eher verschlechtert.

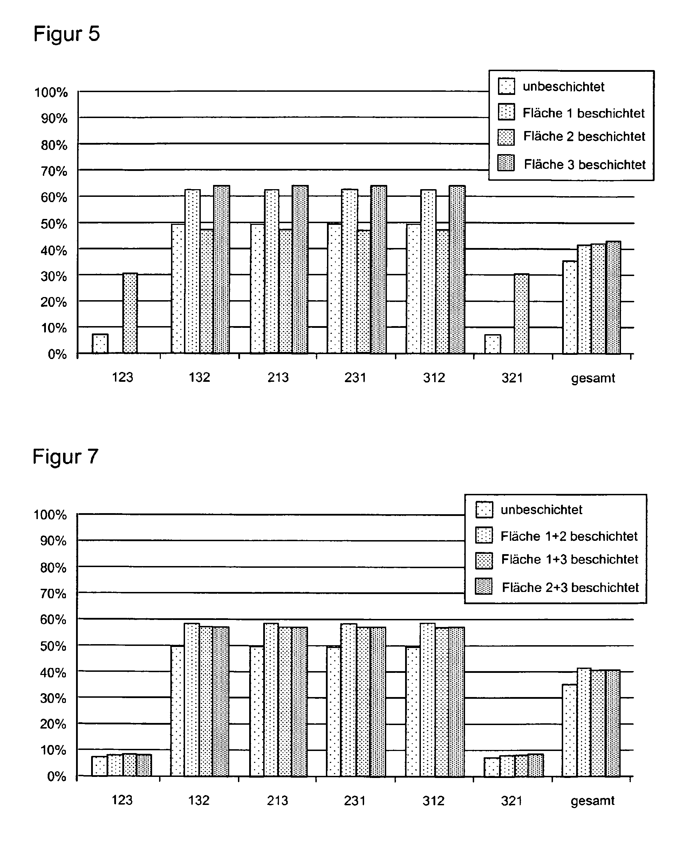

In Summe sind die sich durch die Beschichtung ergebenden Polarisationsrichtungen für die Anwendung in der Reflexionslichtschranke 10 besser geeignet als ein unbeschichteter Retroreflektor. Dazu stellt Figur 5 eine energetische Auswertung über die Sektoren und die verschiedenen Fälle der Figur 4 dar. Es gibt Sektoren, in denen der unbeschichtete Retroreflektor das größte Signal liefert. In der ganz rechts gezeigten Gesamtbetrachtung über alle Sektoren ergibt sich aber ein deutlicher Gewinn, wenn eine Fläche beschichtet wird.

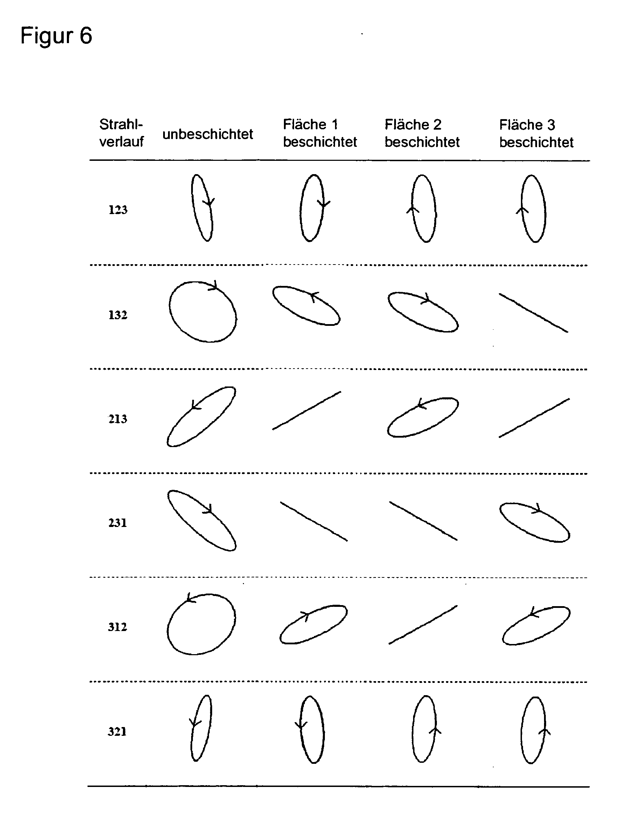

Die Figuren 6 und 7 zeigen ganz analog zu den Figuren 4 und 5 ein zweites Beispiel, das nicht unter den Schutzumfang der Patentansprüche fällt, bei dem anstelle von einer Reflexionsfläche zwei Reflexionsflächen beschichtet sind, während die dritte Reflexionsfläche unbeschichtet bleibt. In dieser Darstellung ergibt sich noch ein recht ähnllcher Effekt, der aber ebenfalls belegt, dass mit unterschiedlichen Reflexionseigenschaften der drei Reflexionsflächen bessere Ergebnisse erzielt werden als mit einem unbeschichteten Retroreflektor.

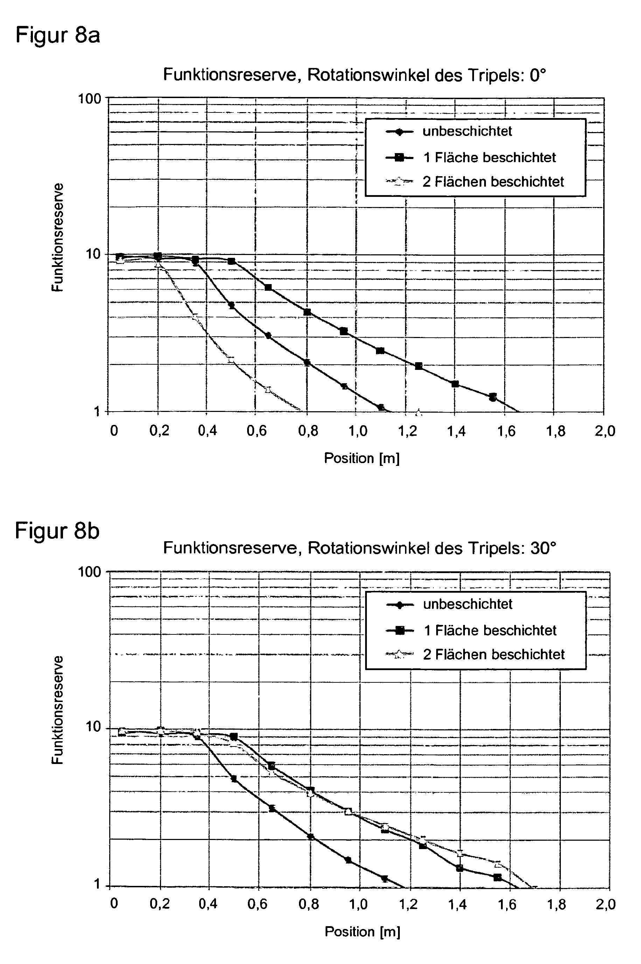

Die Figuren 8a und 8b zeigen jeweils ein Diagramm der Funktionsreserve, also dem Faktor, mit dem das verfügbare Empfangslicht über dem für die Funktion der Reflexionslichtschranke 10 erforderlichen Pegel liegt, für verschiedene Entfernungen oder Positionen des Retroreflektors und für die drei Fälle eines unbeschichteten, eines auf genau einer Reflexionsfläche des Tripels beschichteten und eines auf zwei Reflexionsflächen des Tripels beschichteten Retroreflektors. Für die Detektionssicherheit der Reflexionslichtschranke 10 ist vorteilhaft, wenn die Funktionsreserve erst bei möglichst großen Positionen abfällt.

In Figur 8a bei einem Rotationswinkel des Tripels von 0° zu dem einfallenden Strahl zeigt die Ausführungsform mit genau einer beschichteten Reflexionsfläche die größte Funktionsreserve, während die nicht vom Schutzumfang der Patentansprüche umfasste Ausführungsform mit zwei beschichteten Reflexionsflächen sogar zu einer schlechteren Funktionsreserve führt als diejenige mit unbeschichtetem Retroreflektor.

Bei einem Rotationswinkel des Tripels von 30° zu dem einfallenden Strahl dagegen haben beide erfindungsgemäßen Ausführungsformen eine untereinander in etwa gleiche, gegenüber einem unbeschichteten Retroreflektor deutlich verbesserte Funktionsreserve.

Die sich hier zeigende Winkelabhängigkeit wird in Figur 9 noch einmal systematisch dargestellt. Dabei wird die relative Reichweite für die beiden Ausführungsformen mit genau einer beschichteten Reflexionsfläche eines Tripels und die nicht vom Schutzumfang der Patentansprüche umfasste Ausführungsform mit zwei beschichteten Reflexionsflächen eines Tripels einem unbeschichteten Tripel gegenübergestellt. Da die relative Reichweite auf diejenige des unbeschichteten Retroreflektors normiert ist, werden hierfür bei allen Winkeln Werte von hundert Prozent erreicht. Die relative Reichweite für die Ausführungsform mit genau einer beschichteten Reflexionsfläche ist weitgehend unempfindlich gegenüber der Winkelstellung und erreicht eine Steigerung der relativen Reichweite um 60-80 %. Die relative Reichweite für die Ausführungsform mit zwei beschichteten Reflexionsflächen dagegen schwankt stark mit veränderter Winkelstellung und ist dabei manchmal schlechter, manchmal besser als diejenige eines unbeschichteten Retroreflektors.

Der Rotationswinkel lässt sich in der Praxis nicht fest vorgeben, da eine exakte Justierung vor Ort nicht möglich oder zumindest umständlich ist. Dennoch kann man allgemein sagen, dass die Ausführungsform mit genau einer beschichteten Reflexionsfläche die überlegene ist. Dies gilt insbesondere für den besonders anwendungsrelevanten Winkelbereich um 0°.

## Patentansprüche

1. Retroreflektor (12) für eine Reflexionslichtschranke (10), der eine Vielzahl in gleicher Orientierung nebeneinander angeordneter Tripel mit drei zueinander rechtwinklig angeordneten Reflexionsflächen aufweist, wobei mindestens eine Reflexionsfläche des Tripels sich in einer Beschichtung oder Oberflächenstrukturierung von den anderen Reflexionsflächen des Tripels unterscheidet, **dadurch gekennzeichnet,**
**dass** jeweils eine Reflexionsfläche der Tripel eine Beschichtung oder eine Oberflächenstrukturierung aufweist und die anderen beiden Reflexionsflächen der Tripel glatt und unbeschichtet sind, um eine Polarisationsdrehung zu modifizieren, so dass einfallendes linear polarisiertes Licht zu einem größeren Anteil als um 90° gedrehtes polarisiertes Licht reflektiert wird als bei einem Retroreflektor mit drei unbeschichteten Reflexionsflächen je Tripel.

2. Retroreflektor (12) nach Anspruch 1.
wobei die Beschichtung metallisch ist, insbesondere Gold, Silber oder Aluminium aufweist, oder wobei eine dichroitische Metalloxidbeschichtung vorgesehen ist, und wobei insbesondere die Beschichtung durch Sputtern oder Bedampfen aufgebracht ist.

3. Retroreflektor (12) nach Anspruch 1 oder 2,
wobei die Oberflächenstrukturierung Strukturen in der Größenordnung der Wellenlänge von sichtbarem, infrarotem oder ultraviolettem Licht aufweist, insbesondere des von der Reflexionslichtschranke (10) ausgesandten Lichts (26).

4. Retroreflektor (12) nach einem der vorhergehenden Ansprüche,
wobei das Tripel ein Tripelprisma aus einem optisch transparentem Material ist, insbesondere Glas, wobei an den Reflexionsflächen Totalreflexion stattfindet.

5. Retroreflektor (12) nach einem der vorhergehenden Ansprüche,
wobei der Retroreflektor (12) eine Folie mit einer Strukturierung in Form einer Vielzahl von Mikroprismen aufweist.

6. Optoelektronischer Sensor (10), insbesondere Reflexionslichtschranke (12), der mindestens einen Lichtsender (16) und mindestens einen Lichtempfänger (32)
aufweist, die derart zueinander angeordnet sind, dass ein von dem Lichtsender (16) ausgesandter Lichtstrahl (26) auf einem Sendepfad zu einem Retroreflektor (12) nach einem der vorhergehenden Ansprüche und auf einem im Wesentlichen mit dem Sendepfad übereinstimmenden Empfangspfad zu dem Lichtempfänger (32) zurück geführt wird.

7. Sensor (10) nach Anspruch 6,
wobei dem Lichtsender (16) ein Polarisator (18) und dem Lichtempfänger (32) ein Polfilter (30) zugeordnet ist, und wobei eine Auswertungseinheit (34) des Sensors (10) dafür ausgebildet ist, eine Unterbrechung des Lichtstrahls (26, 28) als Erfassung eines Objekts zu erkennen.

8. Verfahren zur polarisationsdrehenden Reflexion eines einfallenden linear polarisierten Lichtstrahls (26), wobei der Lichtstrahl (26, 28) in sich zurückgeworfen wird, indem der Lichtstrahl (26) nacheinander an den jeweiligen drei rechtwinklig zueinander angeordneten Reflexionsflächen einer Velzahl in gleicher Orientierung nebeneinander angeordneter Tripel eines Retroreflektors (12) reflektiert wird, wobei bei den drei Reflexionen an den drei Reflexionsflächen eine unterschiedliche relative Phasenänderung zwischen den s-polarisierten und den p-polarisierten Anteilen des Lichtstrahls (26) aufgrund einer unterschiedlichen Beschichtung oder Oberflächenstrukturierung der drei Reflexionsschichten erfolgt, **dadurch gekennzeichnet,**
**dass** jeweils eine der drei Reflexionen an einer beschichteten oder mit einer Oberflächenstrukturierung versehenen Reflexionsfläche und zwei der drei Reflexionen an glatten und unbeschichteten Reflexionsflächen erfolgen, so dass einfallendes linear polarisiertes Licht zu einem größeren Anteil als um 90° gedrehtes polarisiertes Licht reflektiert wird als bei einem Retroreflektor mit drei unbeschichteten Reflexionsflächen je Tripel.

## Claims

1. A retroreflector (12) for a reflection light barrier (10), said retroreflector having a plurality of triples which are arranged in the same orientation next to one another and which have three reflection surfaces arranged at right angles to one another, wherein at least one reflection surface of the triple differs from the other reflection surfaces of the triple by a coating or surface structuring, **characterised in that**
a respective one reflection surface of the triples has a coating or a surface structuring and the other two reflection surfaces of the triples are smooth and uncoated to modify a polarisation direction such that incident linearly polarised light is reflected at a larger portion than polarised light rotated by 90° than with a retroreflector having three uncoated reflection surfaces per triple.

2. A retroreflector (12) in accordance with claim 1,
wherein the coating is metallic, in particular comprises gold, silver or aluminium, or wherein a dichroitic metal oxide coating is provided, and wherein the coating is in particular applied by sputtering or vaporisation.

3. A retroreflector (12) in accordance with claim 1 or claim 2,
wherein the surface structuring has structures in the order of magnitude of the wavelength of visible, infrared or ultraviolet light, in particular of the light (26) transmitted by the reflection light barrier (10).

4. A retroreflector (12) in accordance with any one of the preceding claims,
wherein the triple is a triple prism made from an optically transparent material, in particular glass, wherein total reflection takes place at the reflection surfaces.

5. A retroreflector (12) in accordance with any one of the preceding claims,
wherein the retroreflector (12) has a film having a structuring in the form of a plurality of microprisms.

6. An optoelectronic sensor (10), in particular a reflection light barrier (12), which has at least one light transmitter (16) and at least one light receiver (32) which are arranged with respect to one another such that a light ray (26) transmitted by the light transmitter (16) is guided on a transmission path to a retroreflector (12) in accordance with any one of the preceding claims and is guided back to the light receiver (32) on a reception path substantially coinciding with the transmission path.

7. A sensor (10) in accordance with claim 6,
wherein a polariser (18) is associated with the light transmitter (16) and a polarising filter (30) is associated with the light receiver (32), and wherein an evaluation unit (34) of the sensor (10) is configured to recognise an interruption of the light ray (26, 28) as a detection of an object.

8. A method for the polarisation-rotating reflection of an incident linearly polarised light ray (26), wherein the light ray (26, 28) is reflected back into itself in that the light ray (26) is reflected sequentially at the respective three reflection surfaces arranged at right angles to one another of a plurality of triples of a retroreflector (12) arranged in the same orientation next to one another, wherein, in the three reflections at the three reflection surfaces, a different relative phase variation takes place between the s-polarised portions and the p-polarised portions of the light ray (26) due to a different coating or surface structuring of the three reflection layers, **characterised in that**
a respective one of the three reflections takes place at a reflection surface which is coated or which is provided with a surface structuring and two of the three reflections take place at smooth and uncoated reflection surfaces so that incident linearly polarised light is reflected at a larger portion than polarised light rotated by 90° than with a retroreflector having three uncoated reflection surfaces per triple.

## Revendications

1. Rétroréflecteur (12) pour une barrière lumineuse à réflexion (10), qui comprend une pluralité de triplets agencés les uns à côté des autres avec la même orientation et comprenant trois surfaces de réflexion agencées perpendiculairement les unes aux autres, dans lesquels au moins une surface de réfection du triplet diffère des autres surfaces de réflexion du triplet par un revêtement ou par une structuration de surface,
**caractérisé en ce que**
une surface de réflexion respective du triplet comporte un revêtement ou une structuration de surface et les deux autres surfaces de réflexion du triplet sont lisses et non revêtues, afin de modifier une rotation de polarisation de sorte que la lumière polarisée linéaire incidente est réfléchie sous forme de lumière polarisée tournée de 90° en une plus forte proportion qu'avec un rétroréflecteur comportant trois surfaces de réflexion non revêtues par triplet.

2. Rétroréflecteur (12) selon la revendication 1,
dans lequel le revêtement est métallique, comprenant en particulier de l'or, de l'argent ou de l'aluminium, ou dans lequel il est prévu un revêtement en oxyde métallique dichroïque, et dans lequel le revêtement est en particulier appliqué par pulvérisation ou par vaporisation.

3. Rétroréflecteur (12) selon la revendication 1 ou 2,
dans lequel la structuration de surface comporte des structures de l'ordre de grandeur de la longueur d'onde de lumière visible, infrarouge ou ultraviolette, en particulier de la lumière (26) émise par la barrière lumineuse à réflexion (10).

4. Rétroréflecteur (12) selon l'une des revendications précédentes, dans lequel le triplet est un prisme triple en un matériau optiquement transparent, en particulier en verre, tel qu'une réflexion totale se produit au niveau des surfaces de réflexion.

5. Rétroréflecteur (12) selon l'une des revendications précédentes, dans lequel le rétroréflecteur (12) comprend un film avec une structuration sous la forme d'une pluralité de microprismes.

6. Capteur optoélectronique (10), en particulier barrière lumineuse à réflexion (12), qui comprend au moins un émetteur de lumière (16) et au moins un récepteur de lumière (32), qui sont agencés les uns par rapport aux autres de telle manière qu'un rayon de lumière (26) émis par l'émetteur de lumière (16) est mené sur un trajet d'émission à un rétroréflecteur (12) selon l'une des revendications précédentes, et renvoyé vers le récepteur de lumière (32) sur un trajet de réception qui coïncide sensiblement avec le trajet d'émission.

7. Capteur (10) selon la revendication 6,
dans lequel un polariseur (18) est associé à l'émetteur de lumière (16) et un filtre polaire (30) est associé au récepteur de lumière (32), et dans lequel une unité d'évaluation (34) du capteur (10) est réalisée pour reconnaître une interruption du rayon de lumière (26, 28) comme la détection d'un objet.

8. Procédé pour la réflexion avec rotation de polarisation d'un rayon de lumière polarisée linéaire incident (26), dans lequel le rayon de lumière (26, 28) est renvoyé sur lui-même en amenant le rayon de lumière (26) à être réfléchi successivement sur les trois surfaces de réflexion respectives, agencées perpendiculairement les unes aux autres, d'une pluralité de triplets, agencés les uns à côté des autres avec la même orientation, d'un rétroréflecteur (12), dans lequel il se produit lors des trois réflexions au niveau des trois surfaces de réflexion une modification de phase relative différente entre les proportions à polarisation s et les proportions à polarisation p du rayon de lumière (26) en raison d'une différence de revêtement ou de structuration de surface des trois couches de réflexion,
**caractérisé en ce que**
l'une des trois réflexions respectives a lieu au niveau d'une surface de réflexion revêtue ou dotée d'une structuration de surface, et deux des trois réflexions ont lieu au niveau de surfaces de réflexion lisses et non revêtues, de sorte que la lumière polarisée linéaire incidente est réfléchie sous forme de lumière polarisée tournée de 90° en plus forte proportion qu'avec un rétroréflecteur avec trois surfaces de réflexion non revêtues par triplet.
